Europäisches Patentamt

(19) European Patent Office

Office européen des brevets

(11) Numéro de publication: **0 231 852**
**A2**

(12) **DEMANDE DE BREVET EUROPEEN**

(21) Numéro de dépôt: **87101052.6**

(22) Date de dépôt: **26.01.87**

(51) Int. Cl.4: **B23B 29/034**

(30) Priorité: **05.02.86 CH 450/86**

(43) Date de publication de la demande:
**12.08.87 Bulletin 87/33**

(84) Etats contractants désignés:
**DE FR**

(71) Demandeur: **SCHNYDER & CIE**
**Rue Principale 43-45**
**CH-2735 Bévilard(CH)**

(72) Inventeur: **Schnyder, Urs**
**Sous Moron 1**
**CH-2735 Bévilard(CH)**
Inventeur: **Wüst, Robert**
**Morépont 17**
**CH-2800 Delémont(CH)**

(74) Mandataire: **Finck, Dieter et al**
**Patentanwälte v. Füner, Ebbinghaus, Finck**
**Mariahilfplatz 2 & 3**
**D-8000 München 90(DE)**

(54) Mandrin comportant des moyens de commande de la position d'un outil.

(57) Le mandrin comporte un organe d'ancrage (1), destiné à être fixé dans la broche d'une machine-outil tournant autour d'un axe de rotation (xx'), une base (2), solidaire de l'organe d'ancrage, et un coulisseau (3) pouvant se déplacer dans la base perpendiculairement à l'axe de rotation et supportant le manche (26) d'un outil.

Le coulisseau peut être déplacé à l'aide d'un poussoir (7) présentant à une extrémité une face oblique (8). Le poussoir est rendu solidaire, grâce à une goupille (20), d'une bague coulissante (15) qui présente une piste circulaire (16, 19) servant d'appui à un organe de commande extérieur (17, 18) en forme de fourchette.

L'action de l'organe de commande sur la position du coulisseau et de l'outil est possible même lorsque le mandrin est en rotation, ce qui permet l'usinage de pièces ayant des parties coniques, des chambrages ou des filetages.

FIG. 2

## Mandrin comportant des moyens de commande de la position d'un outil

La présente invention concerne un madrin porte-outil destiné à être monté sur la broche d'une machine-outil tournante, telle qu'une fraiseuse, une perceuse ou un tour. Elle concerne plus particulièrement un madrin dont l'outil est fixé sur un coulisseau mobile pouvant être déplacé perpendiculairement à l'axe de rotation de la machine par des moyens de commande.

De tels mandrins sont bien connus. Dans les réalisations existantes le mandrin comporte, par exemple, une bague graduée dont la rotation manuelle provoque le déplacement de l'outil d'une distance donnée au moyen d'une vis micrométrique interposée entre la bague et le coulisseau.

Chaque réglage de la position de l'outil nécessite, dans ce cas, l'arrêt de la machine. Ceci représente un inconvénient important puisque ces arrêts allongent le temps de travail. D'autre part, seules des surfaces simples peuvent être usinées.

La présente invention se propose de pallier cet inconvénient en réalisant un madrin dans lequel la position de l'outil peut être modifiée à tout instant à l'aide d'un organe de commande, aussi bien lorsque le mandrin est au repos que lorsqu'il est en rotation.

Dans ce but, le mandrin selon l'invention, comprenant un organe d'ancrage présentant un axe de révolution, cet organe étant destiné à être fixé sur une machine-outil tournante, une base solidaire de cet organe, un coulisseau mobile portant un outil, le coulisseau étant disposé dans la base de manière à pouvoir se déplacer transversalement par rapport à l'axe de révolution, et des moyens de commande agissant sur la position du coulisseau dans la base, est particulièrement remarquable en ce que les moyens de commande comportent une piste circulaire centrée sur l'axe de révolution et disposée dans un plan perpendiculaire à cet axe, cette piste servant d'appui à un organe de commande extérieur, aussi bien lorsque le mandrin est immobile que lorsqu'il tourne autour de l'axe de révolution coïncidant avec l'axe de rotation de la partie tournante de la machine.

Le mandrin selon l'invention présente l'avantage d'avoir un rendement de production élevé et de permettre l'usinage , par exemple, de cônes, de chambrages, de filetages, etc.

D'autres caractéristiques et avantages de la présente invention ressortiront de la description qui va suivre, faite en regard du dessin annexé et donnant, à titre d'exemple explicatif mais nullement limitatif, une forme avantageuse de réalisation d'un mandrin porte-outil. Sur ce dessin, où les mêmes références se rapportent à des éléments analogues :

-la fig. 1 est une vue en plan d'une forme avantageuse de réalisation d'un mandrin selon l'invention;

-la fig. 2 est une vue en coupe selon II-II du mandrin, montrant de détail du mécanisme de commande de la position de l'outil;

-la fig. 3 est une vue en coupe selon III-III du mandrin faisant apparaître les organes de guidage du coulisseau; et

-la fig. 4 montre le mandrin de profil, vu de côté de l'outil.

En référence au dessin, le mandrin selon l'invention se compose essentiellement d'un organe d'ancrage 1, d'une base 2 solidaire de l'organe 1, et d'un coulisseau mobile 3 pouvant se déplacer dans la base 2.

L'organe d'ancrage 1 est destiné à être fixé sur la broche, par exemple, d'une fraiseuse non représentée. A cet effet il présente une surface extérieure conique. Cette surface définit un axe de révolution xx' pour le mandrin, cet axe venant en coïncidence avec l'axe de rotation de la broche lorsque le mandrin est mis sur la fraiseuse. L'organe 1 comporte en outre un trou central taraudé 4 servant de logement à un arbre fileté, non représenté, qui permet de serrer le mandrin sur la broche.

La base 2 est de forme générale cylindrique, ayant l'axe xx' comme axe de symétrie, et elle constitue, de préférence, avec l'organe d'ancrage 1 une seule et même pièce. Dans la base est ménagé un passage cylindrique d'axe zz' dans lequel est logé le coulisseau 3 de forme cylindrique également. Les axes xx' et zz' sont perpendiculaires l'un à l'autre et sont situés dans un même plan.

Le trou central 4 est prolongé dans la base 2 par un trou coaxial 6 dans lequel est logé un poussoir 7. L'extrémité du poussoir faisant face au coulisseau 3 est terminée par une face plane 8, disposée obliquement par rapport à l'axe xx'. Dans le coulisseau 3, en regard du poussoir 7, est ménagée une ouverture 9 présentant une face inclinée plane 10, parallèle à la face 8 et venant en contact avec celle-ci.

Les faces 8 et 10 sont inclinées sur l'axe xx' par exemple de 45°. Dans ces conditions, le déplacement du poussoir 7 le long de l'axe xx' en direction du coulisseau 3 entraîne un déplacement de ce dernier suivant l'axe zz'. Afin de diminuer les forces de frottement entre les faces 8 et 10, un rouleau 11 peut avantageusement être disposé entre ces faces dans une rainure du coulisseau.

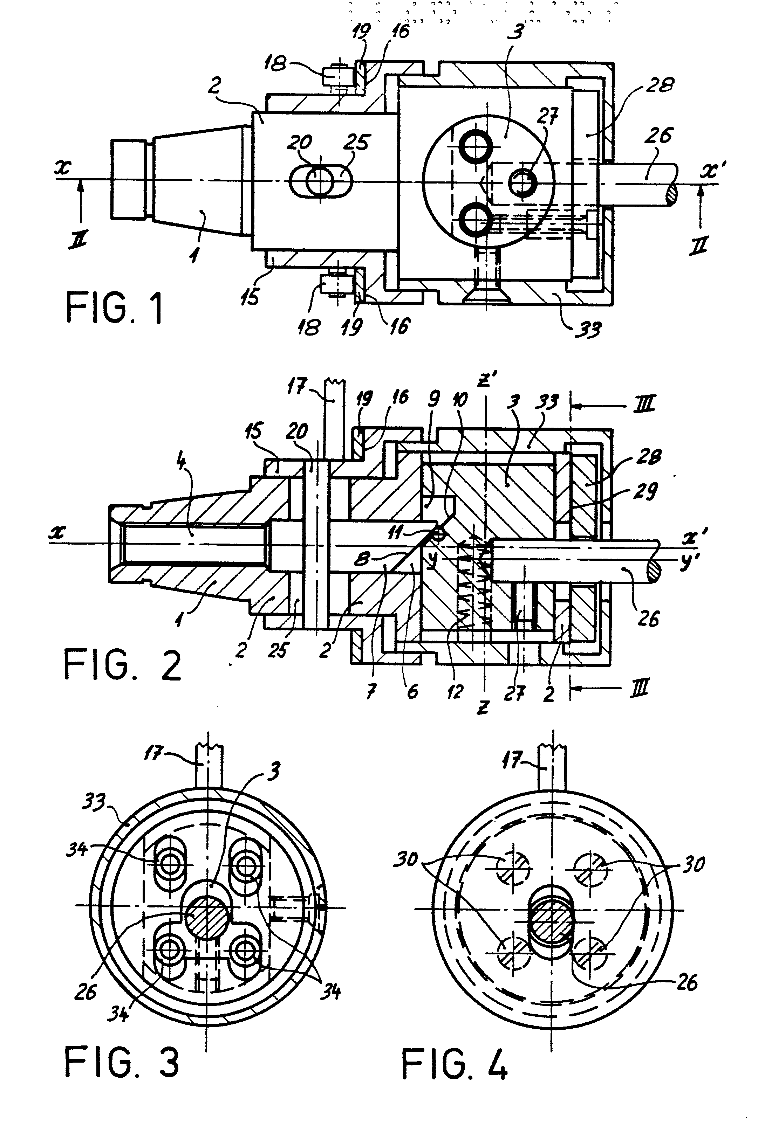

Le retour du coulisseau 3 dans une position initiale, après le retrait du poussoir 7, est obtenu au moyen de deux ressorts 12, dont un seul représenté sur la fig. 2. Ces ressorts, disposés symétriquement par rapport au plan défini par les axes xx' et zz', en s'appuyant sur la base 2 par l'intermédiaire d'un capuchon 33 solidaire de la base, exercent sur le coulisseau une force parallèle et de même sens que l'axe zz'.

Le mandrin comporte en outre, disposée à la périphérie de la base 2, une bague 15 coulissant sur la base parallèlement à l'axe xx'. Sur la bague est ménagée une piste circulaire 16, centrée sur l'axe xx' et disposée dans un plan perpendiculaire à cet axe.

Un organe de commande 17 en forme de levier, fixé sur le bâti de la machine-outil et terminé d'un côté par une fourchette à deux bras portant à ses extrémités des rouleaux 18 venant prendre appui sur la piste 16 au travers d'une rondelle 19 en acier trempé, permet d'exercer une force parallèle à l'axe xx' sur la bague 15.

Le poussoir 7 est rendu solidaire de la bague 15 au moyen d'une goupille 20 traversant ces deux pièces. La goupille passe dans une ouverture allongée 25 de la base 2, lui permettant de se mouvoir le long de l'axe xx'. L'action de l'organe de commande 17 sur la bague 15 a donc pour effet de déplacer le coulisseau 3 dans la base 2.

Dans un trou d'axe yy' du coulisseau 3, axe parallèle à l'axe xx', se trouve le manche 26 d'un outil non représenté, par exemple un burin. La fixation de l'outil est obtenue à l'aide d'une vis, non représentée, engagée dans un trou fileté 27 du coulisseau, disposé perpendiculairement à l'axe yy'.

Durant l'usinage, l'outil exerce sur le coulisseau des efforts de réaction tendant à le faire pivoter autour de l'axe zz'. Afin d'éviter ce mouvement, une plaque de guidage 28, s'appuyant sur une face plane 29 de la base 2, est fixée sur le coulisseau par des vis 30. Le jeu est donné par des entretoises 34, traversées par les vis 30 et disposées entre la plaque 28 et la base 2. Pour que le déplacement transversal du coulisseau puisse avoir lieu, des ouvertures allongées 31, 32 sont pratiquées dans la base 2 aux endroits où elle est transversée par les vis 30.

Enfin, la partie du mandrin qui supporte l'outil est recouverte par le capuchon 33 en vue de la protéger des chocs et de la poussière.

En réponse à l'action de l'organe de commande, l'outil se déplace donc avec le coulisseau parallèlement à l'axe zz'. Si l'organe de commande est en outre asservi à la position de l'outil selon l'axe xx', par exemple à l'aide d'une came, l'usinage de pièces complexes, comportant des parties coniques, des chambrages ou des filetages, devient possible avec le mandrin selon l'invention.

Il est évident que le mandrin qui vient d'être décrit peut subir différentes modifications et se présenter sous d'autres variantes évidentes à l'homme du métier, sans sortir du cadre de la présente invention.

## Revendications

1. Mandrin comprenant un organe d'ancrage (1) présentant un axe de révolution (xx'), ledit organe étant destiné à être fixé sur une machine-outil tournante, une base (2) solidaire dudit organe, un coulisseau mobile (3) portant un outil (26), le coulisseau étant disposé dans la base de manière à pouvoir se déplacer transversalement par rapport audit axe, et des moyens de commande (7, 11, 15, 20) agissant sur la position du coulisseau dans la base, caractérisé en ce que lesdits moyens comportent une piste circulaire (16, 19) centrée sur l'axe de révolution (xx') et disposée dans un plan perpendiculaire à cet axe, cette piste servant d'appui à un organe de commande (17, 18) extérieur, aussi bien lorsque le mandrin est immobile que lorsqu'il tourne autour dudit axe.

2. Mandrin selon la revendication 1, caractérisé en ce que lesdits moyens de commande comprennent :
-une bague (15), porant ladite piste (16, 19), qui coulisse sur la base (2) parallèlement à l'axe de révolution (xx');
-un poussoir (7) se déplaçant dans la base (2) et qui vient en contact avec le coulisseau (3) suivant une surface oblique (8) de manière que la position du poussoir détermine la position du coulisseau; et
-une organe de liaison (20) disposé entre la bague et le poussoir de manière que le coulissement de la bague entraîne le déplacement du poussoir.

3. Mandrin selon la revendication 2, caractérisé en ce que lesdits moyens comprennent, en outre, un organe élastique (12) qui exerce une force entre la base (2) et le coulisseau (3) de manière à amener le coulisseau dans une position initiale lorsque l'organe (17, 18) de commande n'est pas en appui sur la piste (16, 19).

0 231 852

FIG. 1

FIG. 2

FIG. 3

FIG. 4